# EUROPEAN PATENT APPLICATION

(11) **EP 4 830 879 A1**
(43) Date of publication of application: **28.10.2026**
(21) Application number: 24908367.6
(22) Date of filing: 18.12.2024
(51) Int. Cl.: B25J 9/16, B62D 57/032

(54) **CONTROL METHOD FOR SELF-COLLISION AVOIDANCE OF WALKING ROBOT HAVING MANIPULATOR, AND WALKING ROBOT FOR PERFORMING SAME**

(30) Priority: 18.12.2023 KR 20230184050
(71) Applicant: Rainbow Robotics Inc., Sejong-si 30141 (KR)
(72) Inventor: KIM, Si Hyun, Daejeon 34052 (KR); JEONG, Hyo Bin, Daejeon 34049 (KR); BAE, Hyo In, Daejeon 35355 (KR)
(74) Representative: Viering, Jentschura & Partner mbB Patent- und Rechtsanwälte
(86) International application number: PCT/KR2024/097153
(87) International publication number: WO 2025/136063

(57) **Abstract**

The present invention relates to a control method for self-collision avoidance of a walking robot equipped with a manipulator and a walking robot performing the same, the control method including the steps of: modeling a first collision-possible part of a manipulator and a second collision-possible part of a robot body into three-dimensional shapes each having line segments and a circular cross section; calculating the shortest distance between a first line segment with respect to the modeled first collision-possible part and a second line segment with respect to the modeled second collision-possible part; calculating a relative Jacobian between first and second points by applying a Jacobian matrix to the first point of the first line segment and the second point of the second line segment connecting the shortest distance; and calculating a speed for avoiding collision between the manipulator and the robot body by using the size of the three-dimensional shapes, the shortest distance between the first and second line segments, and the relative Jacobian between the first and second points.

## Description

### TECHNICAL FIELD

The present invention relates to a control method for self-collision avoidance of a walking robot configured of a plurality of joints and equipped with a manipulator.

### BACKGROUND ART

A robot means a machine that automatically processes or operates a given task using its own ability, and application fields of the robot may be classified into industrial, service, medical, space, and underwater purposes.

Among them, industrial robots are applied to industrial automation, and mean multi-purpose manipulators capable of automatic control and reprogram, which mean fixed or mobile robots capable of programming in three axes or more, and may include hand-guided robots, manipulator parts of mobile robots, collaborating robots, and the like.

Meanwhile, an industrial robot system may be configured by including terminal devices, and all machines, equipment, devices, auxiliary axes, or sensors needed for the robot to perform tasks, together with the industrial robots described above.

Industrial robot systems are already widely used in machining industries, such as automobile production, to repeat operations corresponding to the work of a human arm, and their utilization is increasing as the labor cost increases.

Meanwhile, since multi-joint robots such as industrial robots or walking robots use a plurality of motors, self-collision may occur according to the driving angle.

Accordingly, in order to control the multi-joint robots, various variables, such as mechanical limit angles of hardware, self-collision avoidance, and the like, should be considered, and to this end, techniques for the robots to find an optimal trajectory for moving while avoiding paths where self-collision may occur are developed.

However, since the workspace of the multi-joint robots may be narrowed when movement of the robots is limited to avoid self-collision, it needs to develop techniques that allow the multi-joint robots to have a workspace as large as possible.

### SUMMARY OF THE INVENTION

### TECHNICAL PROBLEM

Therefore, the present invention has been made in view of the above problems, and it is an object of the present invention to provide a control method for efficiently avoiding self-collision of a walking robot equipped with a manipulator, and a robot that performs the method.

The technical problems of the present invention are not limited to those mentioned above, and unmentioned other technical problems will be clearly understood by those skilled in the art from the following description.

### TECHNICAL SOLUTION

To accomplish the above object, according to one aspect of the present invention, there is provided a control method for self-collision avoidance of a walking robot equipped with a manipulator in a robot main body, the control method comprising the steps of: modeling each of a first collision-prone part of the manipulator and a second collision-prone part of the robot main body as a three-dimensional shape having a line segment and a circular cross section; calculating a shortest distance between a first line segment of the modeled first collision-prone part and a second line segment of the modeled second collision-prone part; calculating a relative Jacobian between a first point on the first line segment and a second point on the second line segment connecting the shortest distance, by applying a Jacobian matrix to the first and second points; and calculating a speed for avoiding collision between the manipulator and the robot main body using a size of the three-dimensional shape, the shortest distance between the first and second line segments, and the relative Jacobian between the first and second points.

The first collision-prone part may include a link portion that moves by a joint provided in the manipulator, and the second collision-prone part includes a link portion that moves by a part of a torso of the robot main body or a joint of a leg.

At least part of the control method for self-collision avoidance of a walking robot equipped with a manipulator may be implemented as a computer-readable recording medium that records a program to be executed on a computer, and may be provided as the program itself.

Meanwhile, the control method for self-collision avoidance of a walking robot equipped with a manipulator may be performed by a robot according to an embodiment of the present invention.

A robot according to an embodiment of the present invention has a self-collision avoidance function, and to this end, the robot comprises: a processor; a memory for loading a computer program executed by the processor; and a storage for storing the computer program, wherein the computer program includes instructions for executing an operation of modeling each of a first collision-prone part of the manipulator mounted in the robot main body and a second collision-prone part of the robot main body as a three-dimensional shape having a line segment and a circular cross section, an operation of calculating a shortest distance between a first line segment of the modeled first collision-prone part and a second line segment of the modeled second collision-prone part, an operation of calculating a relative Jacobian between a first point on the first line segment and a second point on the second line segment connecting the shortest distance, by applying a Jacobian matrix to the first and second points, and an operation of calculating a speed for avoiding collision between the manipulator and the robot main body using a size of the three-dimensional shape, the shortest distance between the first and second line segments, and the relative Jacobian between the first and second points.

### ADVANTAGEOUS EFFECTS

According to an embodiment of the present invention, as a self-collision avoidance function of a multi-joint robot may be applied in real time through relatively simple operations by modeling the collision-prone parts of the robot as line segments and three-dimensional shapes and calculating a speed for avoiding collision between the collision-prone parts using the size of the three-dimensional shape, the shortest distance between the line segments, and a relative Jacobian, self-collision can be prevented while expanding the workspace of the robot.

According to another embodiment of the present invention, when a walking robot is equipped with a manipulator, as collision-prone parts of the manipulator and collision-prone parts of a robot main body are modeled as line segments and three-dimensional shapes, and a speed for avoiding collision between the manipulator and the robot main body is calculated using the size of a three-dimensional shape, the shortest distance between the line segments, and a relative Jacobian, a self-collision avoidance function between two or more types of robots may be applied in real time.

The technical effects of the present invention are not limited to those mentioned above, and unmentioned other technical effects will be clearly understood by those skilled in the art from the following description.

### BRIEF DESCRIPTION OF THE DRAWINGS

FIG. 1 is a perspective view showing an example of the configuration of a multi-joint robot.
FIG. 2 is a flowchart illustrating a control method for self-collision avoidance of a multi-joint robot according to an embodiment of the present invention.
FIG. 3 is a view conceptually showing the configuration of a multi-joint robot according to an embodiment of the present invention.
FIGS. 4 and 5 are views for explaining embodiments of a method of modeling a collision-prone part of a robot.
FIGS. 6 through 11 are views for explaining embodiments of a method of calculating a speed for avoiding collision.
FIG. 12 is a view showing exemplary forms of a walking robot according to an embodiment of the present invention.
FIG. 13 is a flowchart illustrating a control method for self-collision avoidance of a walking robot equipped with a manipulator according to an embodiment of the present invention.
FIG. 14 is a view conceptually showing the configuration of a walking robot equipped with a manipulator according to an embodiment of the present invention.
FIGS. 15 and 17 are views for explaining embodiments of a method for modeling a collision-prone part of a robot equipped with a manipulator.
FIGS. 18 and 19 are views illustrating embodiments of a method of calculating a collision avoidance speed of a walking robot equipped with a manipulator.
FIG. 20 is a block diagram showing the configuration of a computing device in which methods according to embodiments of the present invention are implemented.

### DETAILED DESCRIPTION OF THE INVENTION

Hereinafter, only the principles of the present invention will be exemplified. Therefore, although not clearly described or shown in this specification, those skilled in the art will be able to implement the principles of the present invention and invent various devices included in the spirit and scope of the present invention. In addition, it should be understood that all conditional terms and embodiments listed in this specification are, in principle, clearly intended only for the purpose of understanding the concept of present invention, and not limited to the embodiments and states specially listed as such.

In addition, it should be understood that all detailed descriptions listing specific embodiments, as well as the principles, aspects, and embodiments of the present invention, are intended to include structural and functional equivalents of such matters. In addition, it should be understood that such equivalents include equivalents that will be developed in the future, as well as currently known equivalents, i.e., all devices invented to perform the same function regardless of the structure.

Accordingly, for example, the block diagrams in the specification should be understood as expressing the conceptual viewpoints of exemplar circuits that embody the principles of the present invention. Similarly, all flowcharts, state transition diagrams, pseudo code, and the like may be practically embodied on computer-readable media, and it should be understood that regardless of whether or not a computer or a processor is explicitly shown, they show various processes performed by the computer or processor.

The functions of various elements shown in the drawings, including functional blocks indicated as a processor or a similar concept, may be provided by the use of hardware capable of executing software in connection with appropriate software, as well as dedicated hardware. When provided by the processor, the functions may be provided by a single dedicated processor, a single shared processor, or a plurality of individual processors, and some of them may be shared.

In addition, explicit use of the terms presented as a processor, control, or concepts similar thereto should not be interpreted by exclusively quoting hardware having an ability of executing software, and should be understood to implicitly include, without limitation, digital signal processor (DSP) hardware, and ROM, RAM and non-volatile memory for storing software. Other known common hardware may also be included.

In the claims of this specification, a component expressed as a means for performing a function described in the detailed description is intended to include all methods that perform functions including, for example, a combination of circuit elements performing the functions or all types of software including firmware/microcode, and is combined with appropriate circuits for executing the software to perform the functions. Since the present invention defined by these claims is combined with the functions provided by the means arranged in various ways, and combined with the methods required by the claims, it should be understood that any means capable of providing the functions is equivalent to those identified from this specification.

The above objects, features, and advantages will become more apparent through the following detailed description related to the accompanying drawings, and accordingly, those skilled in the art may easily implement the technical spirit of the present invention. In addition, when it is determined in describing the present invention that the detailed description of a known technique related to the present invention may unnecessarily obscure the gist of the present invention, the detailed description will be omitted.

Hereinafter, although the embodiments of the present invention are described using a collaborative robot as an example, the present invention is not limited thereto and may be applicable to industrial robots and various other robots.

A collaborative robot is a robot designed to directly interact with humans within a defined collaborative workspace, and a collaborative operation may mean the working state of a robot system and an operator intentionally designed within the collaborative workspace.

In addition, the collaborative workspace is a workspace within a safeguarded space where robots and humans perform tasks together during production operations, and it may mean an area inside a workspace where a robot system (including workpieces) and a person may perform tasks together during a production task.

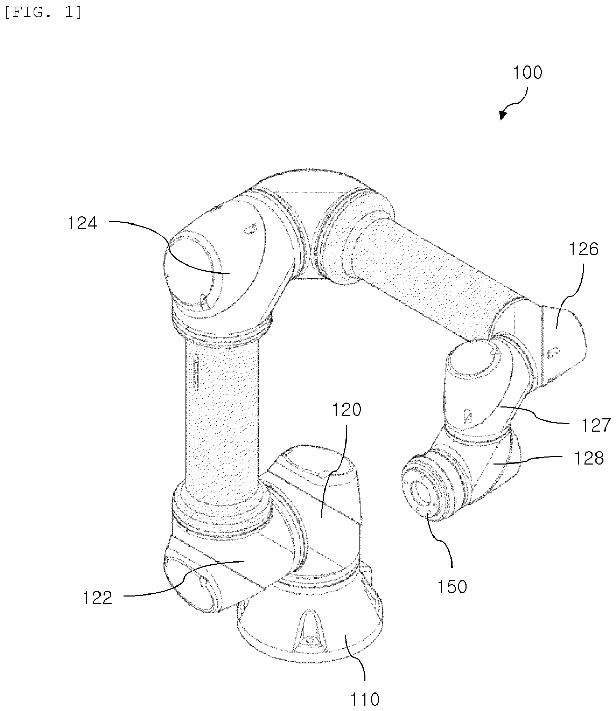

FIG. 1 is a view showing the configuration of a robot according to an embodiment of the present invention, and the robot 100 may be configured to include a base 110, a plurality of joints 120 to 128, and a tool flange 150.

Referring to FIG. 1, the base 110 is a part for fixing the robot 100, and a cable connection connector between the robot 100 and the control box may be formed on the base 110.

The tool flange 150 is a part for mounting a gripper or a tool on the robot 100, and input/output ports for controlling the gripper or tool and buttons for direct teaching may be arranged at the positions adjacent to the tool flange 150.

Meanwhile, as a base joint 120, a shoulder joint 122, an elbow joint 124, a first wrist joint 126, a second wrist joint 127, and a third wrist joint 128 are provided between the base 110 and the tool flange 150, the robot 100 may perform 6-axis joint operations.

As described with reference to FIG. 1, as the multi-joint robot operates according to rotation of a motor provided in each joint, self-collision may occur according to driving angles. Therefore, the workspace of the robot that should be restricted to prevent self-collision needs to be changed in real time.

According to an embodiment of the present invention, as a self-collision avoidance function of a multi-joint robot may be applied in real time through relatively simple operations by modeling the collision-prone parts of the robot as line segments and three-dimensional shapes and calculating a speed for avoiding collision between the collision-prone parts using the size of the three-dimensional shape, the shortest distance between the line segments, and a relative Jacobian, self-collision can be prevented while expanding the workspace of the robot.

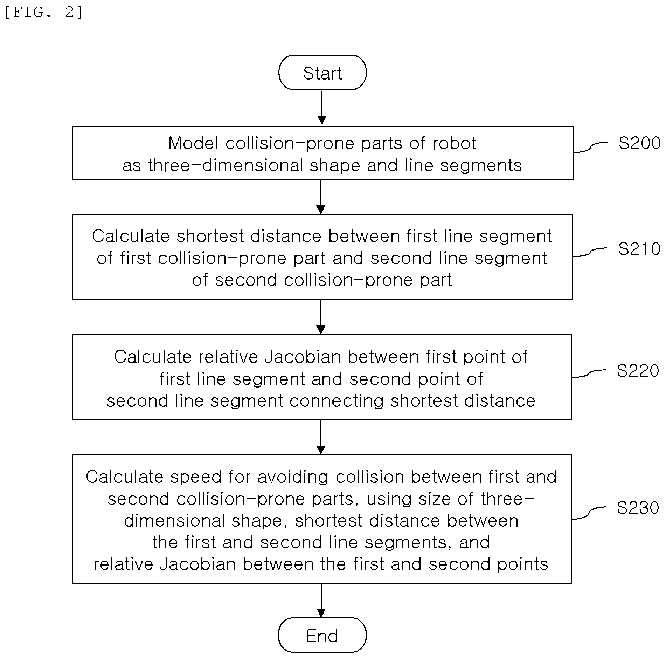

Hereinafter, embodiments of a control method for self-collision avoidance of a multi-joint robot according to the present invention will be described in more detail with reference to FIGS. 2 to 11.

Referring to FIG. 2, each of the collision-prone parts of a robot is modeled as a three-dimensional shape having a line segment and a circular cross-section (step S200).

For example, the collision-prone part may be configured to include a link portion that moves by a joint provided in the robot.

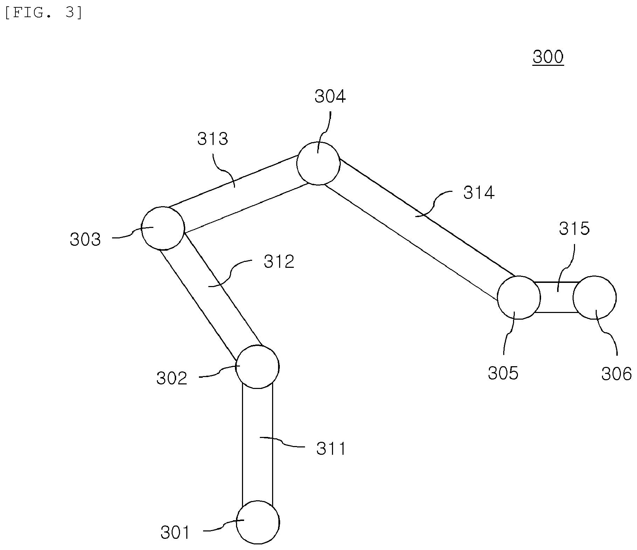

As shown in FIG. 3, the robot may be configured to include a plurality of joints 301, 302, 303, 304, 305, and 306 and a plurality of links 311, 312, 313, 314, 315, and 316 connecting the joints, and each link may move by the rotation of a motor of a joint to which one end of the link is connected.

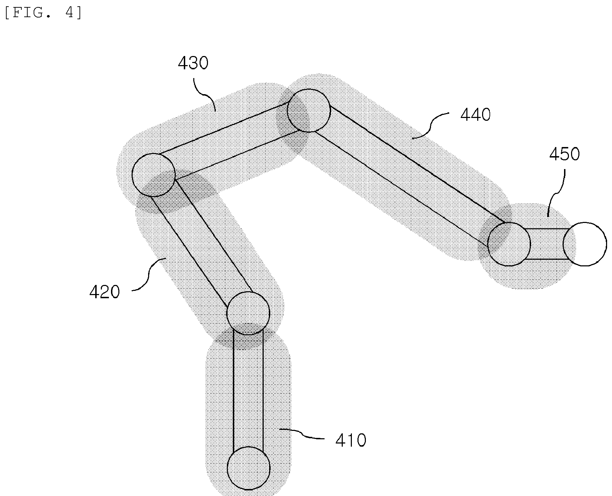

In this case, as shown in FIG. 4, the collision-prone parts 410, 420, 430, 440, and 450 of the robot may be configured to include joints and links.

Here, each collision-prone part is modeled as a line segment, and a three-dimensional shape may be formed using a set of points at the same predetermined distance from the line segment.

Accordingly, the three-dimensional shape may be configured to include a cylindrical part having a radius corresponding to the predetermined distance, and two hemispherical parts located above and below the cylindrical part.

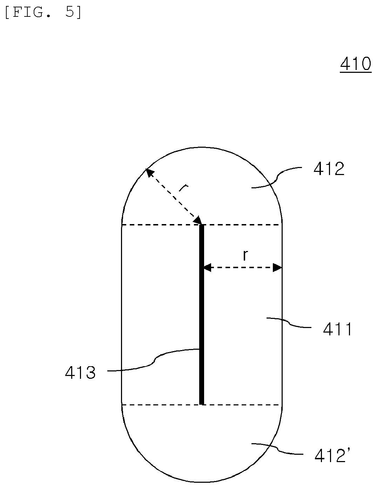

Referring to FIG. 5, the collision-prone part 410 may be modeled as a three-dimensional shape configured of a line segment 413, a cylindrical part 411 having a predetermined radius (r) around the line segment 413, an upper hemispherical part 412 which is a set of points at a predetermined distance (r) from the upper end of the line segment 413, and a lower hemispherical part 412' which is a set of points at a predetermined distance (r) from the lower end of the line segment 413.

Here, the three-dimensional shape of the collision-prone part described above may represent an inaccessible space in the part, and as the radius (r) increases, the inaccessible space may be expanded, and as the radius (r) decreases, the inaccessible space may be narrowed.

Next, the shortest distance between a first line segment of a first collision-prone part and a second line segment of a second collision-prone part among the collision-prone parts modeled at step S200 is calculated (step S210).

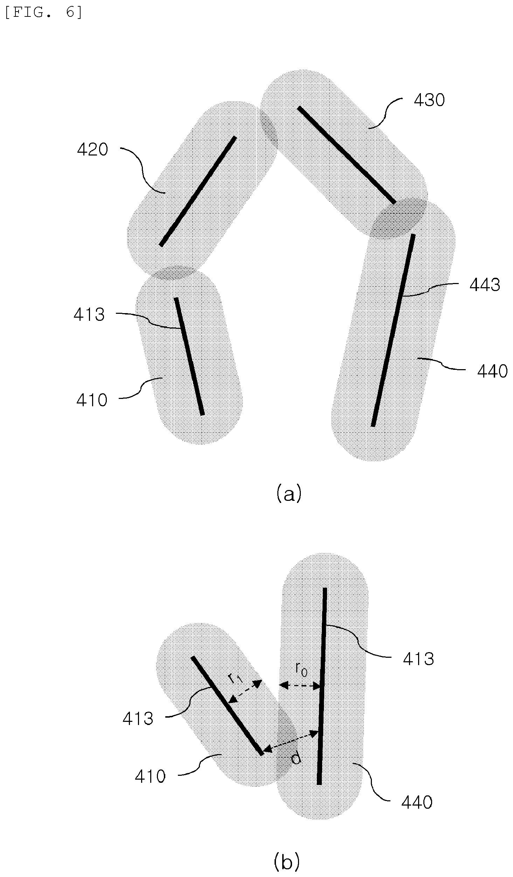

For example, as shown in FIG. 6(a), when the collision-prone parts 410, 420, 430, and 440 of the robot are modeled as line segments and three-dimensional shapes, the shortest distance between the line segment 443 of the first collision-prone part 440 and the line segment 413 of the second collision-prone part 410 may be calculated as shown in FIG. 6(b).

Meanwhile, as shown in FIG. 6(b), when the shortest distance between the line segments 443 and 413 of the two collision-prone parts 440 and 410 is smaller than the sum (r₀+r₁) of the radii (r₀, r₁) of the two collision-prone parts 440 and 410, it may be determined that the two collision-prone parts 440 and 410 have invaded each other's inaccessible spaces.

Here, the radii (r₀, r₁) of the two collision-prone parts 440 and 410 may be set to be the same or different, and the larger the radius of the three-dimensional shape, the wider the inaccessible space of the collision-prone part.

Thereafter, a relative Jacobian between the first and second points is calculated by applying a Jacobian matrix to a first point of the first line segment and a second point of the second line segment connecting the shortest distance calculated at step S210 (step S220).

Next, a speed for avoiding collision between the first and second collision-prone parts is calculated using the size of the three-dimensional shape, the shortest distance between the first and second line segments, and the relative Jacobian between the first and second points (step S230).

The relative Jacobian calculated at step S220 may be a difference between a first Jacobian value, to which the Jacobian matrix is applied at the first point, and a second Jacobian value, to which the Jacobian matrix is applied at the second point, and
accordingly, may represent the relative velocity between the first and second collision-prone parts with respect to the first and second points.

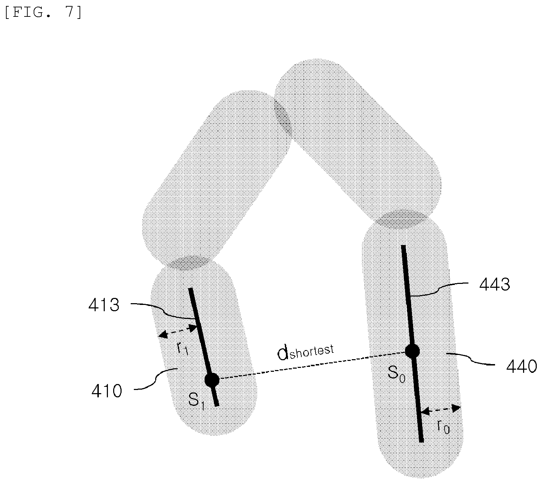

For example, as shown in FIG. 7, the locations of a first point (S₀) and a second point (S₁) connecting the shortest distance (dₛₕₒᵣₜₑₛₜ) between a first line segment 443 of the first collision-prone part 440 and a second line segment 413 of the second collision-prone part 410 may be obtained.

The Jacobian matrix is used to convert the motor angular velocity of each joint provided in the robot into linear velocities and angular velocities at a specific point, and as shown below in Equation 1, the linear velocities (v_{m,x}, v_{m,y}, v_{m,z}) in the x, y, and z axis directions at a corresponding point may be calculated by multiplying a (6×1) matrix, configured of angular velocities (q_{m,0}, q_{m,1}, q_{m,2}, q_{m,3}, q_{m,4}, q_{m,5}) of six motors, by a (3×6) Jacobian matrix. [Equation 1] $\left[\begin{matrix}{J}_{00} & {J}_{01} & {J}_{02} & {J}_{03} & {J}_{04} & {J}_{05} \\ {J}_{10} & {J}_{11} & {J}_{12} & {J}_{13} & {J}_{14} & {J}_{15} \\ {J}_{20} & {J}_{21} & {J}_{22} & {J}_{23} & {J}_{24} & {J}_{25}\end{matrix}\right] \left[\begin{matrix}{\dot{q}}_{m , 0} \\ {\dot{q}}_{m , 1} \\ {\dot{q}}_{m , 2} \\ {\dot{q}}_{m , 3} \\ {\dot{q}}_{m , 4} \\ {\dot{q}}_{m , 5}\end{matrix}\right] = \left[\begin{matrix}{v}_{m , x} \\ {v}_{m , y} \\ {v}_{m , z}\end{matrix}\right]$

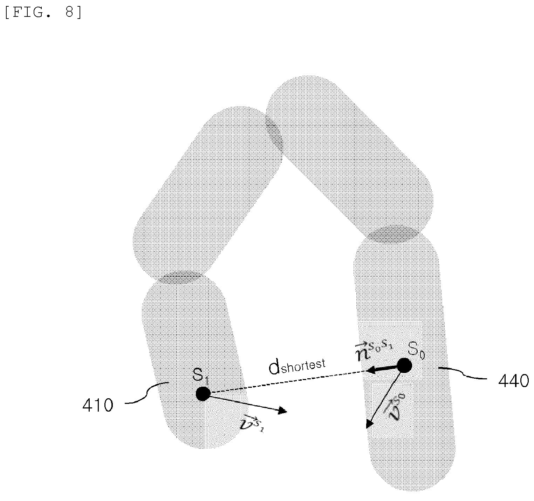

When a Jacobian matrix is applied to each of the first point (S₀) and the second point (S₁), the velocity (v^{s0}) at the first point (S₀) and the velocity (v^{s1}) at the second point (S₁) can be obtained as shown in FIG. 8.

In addition, as shown in FIG. 8, a normal vector (n^{s0s1}) of magnitude 1 in the direction from the first point (S₀) to the second point (S₁) can be obtained.

In addition, the relative Jacobian between the first and second points (S₀, S₁) is calculated as shown below in Equation 2, and a relative velocity between the first and second collision-prone parts 440 and 410 with respect to the first and second points (S₀, S₁) can be obtained. [Equation 2] $\left({J}_{{S}_{0}}-{J}_{{S}_{1}}\right) \dot{q}$

As shown in Equation 2, the relative Jacobian between the first and second points (S₀, S₁) may be obtained by subtracting a second Jacobian value obtained by applying a Jacobian matrix (J_{S1}) to the second point (S₁) from a first Jacobian value obtained by applying a Jacobian matrix (J_{SO}) to the first point (S₀).

Here, as the Jacobian matrix (J_{SO}) at the first point (S₀) and the Jacobian matrix (J_{S1}) at the second point (S₁) are different from each other and calculated as shown below in Equation 3, the relative velocities (v'_{m,x}, v'_{m,y}, v'_{m,z}) in the x, y, and z axis directions may be calculated between the first and second points (S₀, S₁). [Equation 3] $\left[\begin{matrix}{J}_{00}^{S 0} - {J}_{00}^{S 1} & {J}_{01}^{S 0} - {J}_{01}^{S 1} & {J}_{02}^{S 0} - {J}_{02}^{S 1} & {J}_{03}^{S 0} - {J}_{03}^{S 1} & {J}_{04}^{S 0} - {J}_{04}^{S 1} & {J}_{05}^{S 0} - {J}_{05}^{S 1} \\ {J}_{10}^{S 0} - {J}_{10}^{S 1} & {J}_{11}^{S 0} - {J}_{11}^{S 1} & {J}_{12}^{S 0} - {J}_{12}^{S 1} & {J}_{13}^{S 0} - {J}_{13}^{S 1} & {J}_{14}^{S 0} - {J}_{14}^{S 1} & {J}_{15}^{S 0} - {J}_{15}^{S 1} \\ {J}_{20}^{S 0} - {J}_{20}^{S 1} & {J}_{21}^{S 0} - {J}_{21}^{S 1} & {J}_{22}^{S 0} - {J}_{22}^{S 1} & {J}_{23}^{S 0} - {J}_{23}^{S 1} & {J}_{24}^{S 0} - {J}_{24}^{S 1} & {J}_{25}^{S 0} - {J}_{25}^{S 1}\end{matrix}\right] \left[\begin{matrix}{\dot{q}}_{m , 0} \\ {\dot{q}}_{m , 1} \\ {\dot{q}}_{m , 2} \\ {\dot{q}}_{m , 3} \\ {\dot{q}}_{m , 4} \\ {\dot{q}}_{m , 5}\end{matrix}\right] = \left[\begin{matrix}v {′}_{m , x} \\ v {′}_{m , y} \\ v {′}_{m , z}\end{matrix}\right]$

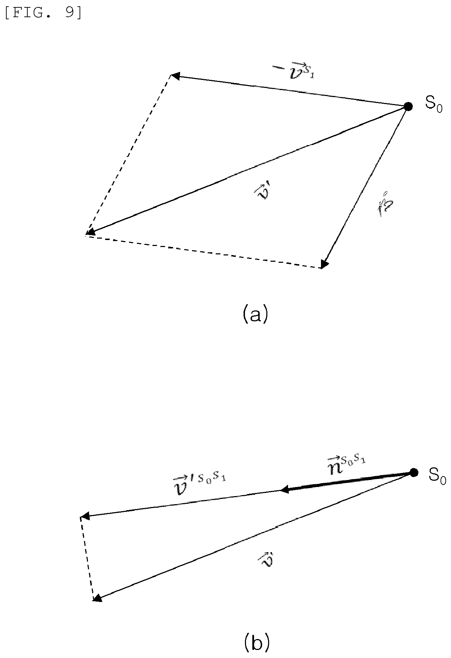

Referring to FIG. 9 (a), the relative velocity (v') between the first and second points (S₀, S₁) can be obtained by subtracting the velocity (v^{s1}) at the second point (S₁) from the velocity (v^{s0}) at the first point (S₀).

In addition, the velocity components between the first and second collision-prone parts in a direction from the first point to the second point can be calculated using the relative Jacobian between the first and second points calculated as described above.

For example, as shown below in Equation 4, only the velocity component (v'^{s0s1}) in the direction from the first point (S₀) to the second point (S₁) can be extracted from the relative velocity between the first and second points (S₀, S₁) by multiplying the relative velocity between the first and second points (S₀, S₁) of the (3×1) matrix obtained in Equation 3 by the normal vector component represented as the (1×3) matrix in the direction from the first point (S₀) to the second point (S₁). [Equation 4] $\left[{\hat{n}}_{x}^{S 0 S 1} {\hat{n}}_{y}^{S 0 S 1} {\hat{n}}_{z}^{S 0 S 1}\right] \left[\begin{matrix}v {′}_{m , x} \\ v {′}_{m , y} \\ v {′}_{m , z}\end{matrix}\right] = v {′}^{S 0 S 1}$

Referring to FIG. 9(b), the relative velocity component (v'^{s0s1}) in the direction from the first point (S₀) to the second point (S₁) can be obtained by performing inner product of the relative velocity (V') between the first and second points (S₀, S₁) and the normal vector (n^{s0s1}) from the first point (S₀) to the second point (S₁).

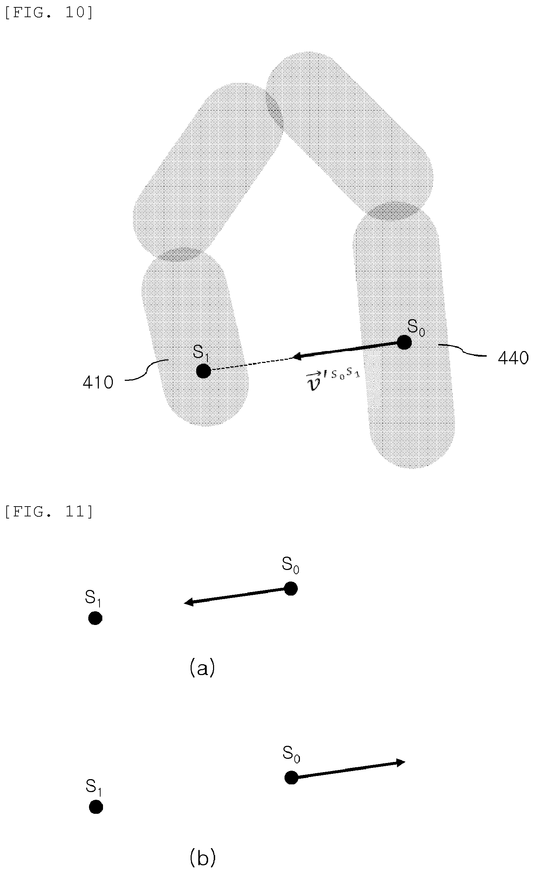

The relative velocity component (v'^{s0s1}) in the direction from the first point (S₀) to the second point (S₁) obtained as described above may represent the relative velocity magnitude (v'^{s0s1}) in the shortest distance direction from the first point (S₀) as shown in FIG. 10.

Referring to FIG. 11 (a), when the relative velocity (v'^{s0s1}) in the shortest distance direction from the first point (S₀) as described above is greater than 0, the first and second collision-prone parts 440 and 410 are closer to each other in the collision direction with respect to the first and second points (S₀, S₁).

Meanwhile, referring to FIG. 11 (a), when the relative velocity (v'^{s0s1}) in the shortest distance direction from the first point (S₀) as described above is smaller than 0, the first and second collision-prone parts 440 and 410 move in a direction away from each other with respect to the first and second points (S₀, S₁).

Therefore, when collision is likely to occur between the first and second collision-prone parts 440 and 410, as a speed for reducing the relative velocity (v'^{s0s1}) in the shortest distance direction from the first point (S₀) to the second point (S₁) to be smaller than 0 is calculated and applied in a direction of moving the first and second collision-prone parts 440 and 410 away from each other with respect to the first and second points (S₀, S₁), collision between the first and second collision-prone parts 440 and 410 can be avoided.

Here, the speed calculated to avoid collision between the first and second collision-prone parts 440 and 410 may be the motor angular velocity of at least one among the plurality of joints provided in the robot.

For example, the relative velocity (v'^{s0s1}) in the shortest distance direction from the first point (S₀) to the second point (S₁) can be reduced to be smaller than 0 by changing at least one among the motor angular velocity of the first joint corresponding to the first collision-prone part 440 and the motor angular velocity of the second joint corresponding to the second collision-prone part 410, and therefore, the first and second collision-prone parts 440 and 410 may move in a direction away from each other with respect to the first and second points (S₀, S₁), so that collision can be avoided.

According to an embodiment of the present invention, step S230 may be performed to subtract the radius (r₀) of the three-dimensional shape of the first collision-prone part 440 and the radius (r₁) of the three-dimensional shape of the second collision-prone part 410 from the shortest distance (dₛₕₒᵣₜₑₛₜ) between the first and second line segments 443 and 413, and calculate a speed for avoiding collision between the first and second collision-prone parts 440 and 410 according to the result of subtraction.

For example, a speed for avoiding collision between the first and second collision-prone parts 440 and 410 can be calculated by performing step S230 only when the value obtained by subtracting the sum of radii (r₀, r₁) from the shortest distance (dₛₕₒᵣₜₑₛₜ) is a negative value smaller than 0 as shown below in Equation 5. [Equation 5] $\left({d}_{shortest}-\left({r}_{0}+{r}_{1}\right)\right) < 0$

Meanwhile, when the value obtained by subtracting the sum of radii (r₀, r₁) from the shortest distance (dₛₕₒᵣₜₑₛₜ) is a positive value greater than 0, the speed for avoiding collision between the first and second collision-prone parts 440 and 410 is not calculated, and the movement can be continued without changing the speed of the first and second collision-prone parts 440 and 410.

In addition, the speed of at least one among the first and second collision-prone parts 440 and 410, for calculating the velocity component in a direction of moving the first point (S₀) and the second point (S₁) away from each other, may be obtained using the result of subtraction as described above.

For example, a speed for avoiding collision between the first and second collision-prone parts 440 and 410 may be calculated using Quadratic Programming (QP), which is an optimization technique for obtaining an optimal solution satisfying the condition such as Equation 6 shown below. [Equation 6] ${\vec{n}}^{{S}_{0} {S}_{1} T} \left({J}_{{S}_{0}}-{J}_{{S}_{1}}\right) \dot{q} \approx k \left({d}_{shortest}-\left({r}_{0}+{r}_{1}\right)\right)$

Specifically, when the value obtained by subtracting the sum of radii (r₀, r₁) from the shortest distance (dₛₕₒᵣₜₑₛₜ) is a negative value smaller than 0, the motor angular velocity (q) of the joint, which controls the relative velocity (v'^{s0s1}) in the shortest distance direction from the first point (S₀) to the second point (S₁) to have a negative value smaller than 0, may be calculated.

In this case, when the motor angular velocity (q) calculated to control the relative velocity (v'^{s0s1}) in the shortest distance direction to have a negative value is applied to the joint, the first and second collision-prone parts 440 and 410 move in a direction away from each other with respect to the first and second points (S₀, S₁), so that collision can be avoided.

Meanwhile, since the absolute value of the relative velocity (v'^{s0s1}) in the shortest distance direction from the first point (S₀) to the second point (S₁) increases as the absolute value of a value obtained by subtracting the sum of radii (r₀, r₁) from the shortest distance (dₛₕₒᵣₜₑₛₜ) increases, the first and second collision-prone parts 440 and 410 may move at a faster speed with respect to the first and second points (S₀, S₁), and collision can be avoided.

In addition, k is a constant in Equation 6, and the larger the value of k, the higher the speed for avoiding collision between the first and second collision-prone parts 440 and 410, and the smaller the value of k, the lower the speed for avoiding collision between the first and second collision-prone parts 440 and 410.

The control method for self-collision avoidance of a multi-joint robot as described with reference to FIGS. 2 to 11 may be performed by a robot according to an embodiment of the present invention.

Meanwhile, although it has been described in the embodiments of the present invention as an example that the robot 300 is a multi-joint robot, such as a manipulator, having 6 degrees of freedom as an example, the present invention is not limited thereto, and may be applied to various robots, such as multi-joint robots having 6 degrees or more of freedom or multi-legged walking robots.

According to another embodiment of the present invention, when a walking robot is equipped with a manipulator, as collision-prone parts of the manipulator and collision-prone parts of a robot main body are modeled as line segments and three-dimensional shapes, and a speed for avoiding collision between the manipulator and the robot main body is calculated using the size of a three-dimensional shape, the shortest distance between the line segments, and a relative Jacobian, a self-collision avoidance function between two or more types of robots may be applied in real time.

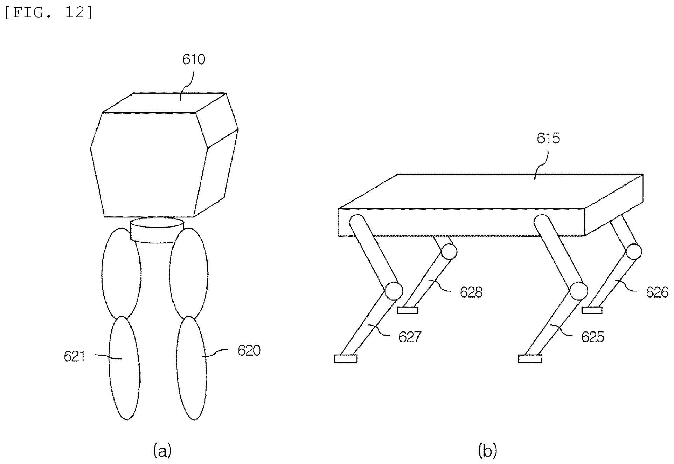

FIG. 12 is a schematic view showing exemplary shapes of a multi-legged walking robot according to an embodiment of the present invention.

Referring to FIG. 12, the robot is a robot capable of walking, and may be a humanoid robot having two legs as shown in FIG. 12(a) or a quadruped robot having four legs as shown in FIG. 12(b).

However, the scope of the present invention is not limited to the shapes of the walking robot shown in FIG. 12. For example, the walking robot may have three, five, or more legs, and may have various shapes, in addition to the humanoid robot or the quadruped robot.

Referring to FIG. 12(a), the walking robot may include a torso 610 and two legs 620 and 621, and each leg 620 or 621 is combined with the torso 610 and may have an upper part and a lower part separated by a leg joint.

Meanwhile, referring to FIG. 12(b), the walking robot may include a torso 615 and four legs 625, 626, 627, and 628, and each leg 625, 626, 627, or 628 is combined with the torso 615, and may have an upper part and a lower part separated by a leg joint.

In addition, the walking robot may further include one or more attachments, such as an articulated arm arranged on the torso 610 or 615 and configured to be movable with respect to the torso 610 or 615. One or more tools, such as a gripper for grasping or holding objects, may be provided at the end of the articulated arm.

Although the walking robot may include a vision system provided with an imaging sensor or a camera, and for example, one or more cameras and one or more two-dimensional or three-dimensional LiDAR sensors may be mounted on the robot 100, the present invention is not limited thereto.

Each sensor or camera mounted on the walking robot collects image data or sensor data of the surrounding environment and terrain. The vision system may pan or tilt the camera to move the sight of the walking robot in a predetermined direction. The image data or sensor data collected by the cameras or sensors of the vision system may be provided to the central processing unit of the robot 100.

In addition, the robot may additionally be provided with sensors for measuring the dynamic state of the robot, in addition to the vision sensors such as the camera and LiDAR sensor described above.

For example, the dynamic state of the robot may include the inertia of the robot, the angle of each joint, force, posture, position or state, velocity or acceleration of each component connected to the joint, center of gravity of the robot, and the like.

In order to measure the dynamic state of the robot as described above, the robot may include an Inertial Measurement Unit (IMU) sensor for measuring inertia, an angle sensor for measuring the angle of a joint, a current sensor for measuring the force of a joint, and the like, but the present invention is not limited thereto.

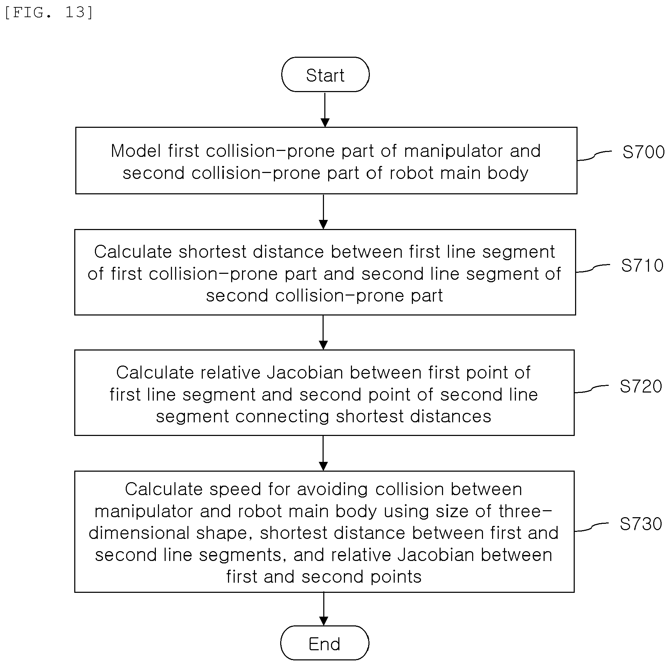

Hereinafter, embodiments of a control method for self-collision avoidance of a walking robot equipped with a manipulator according to the present invention will be described with reference to FIGS. 13 to 19. Meanwhile, in the control method for self-collision avoidance shown in FIGS. 13 to 19, descriptions the same as those described with reference to FIGS. 2 to 11 will be omitted below.

FIG. 13 is a flowchart illustrating a control method for self-collision avoidance of a walking robot equipped with a manipulator according to an embodiment of the present invention.

Referring to FIG. 13, the first collision-prone part of the manipulator and the second collision-prone part of the robot main body are modeled as a three-dimensional shape having a line segment and a circular cross-section (step S700).

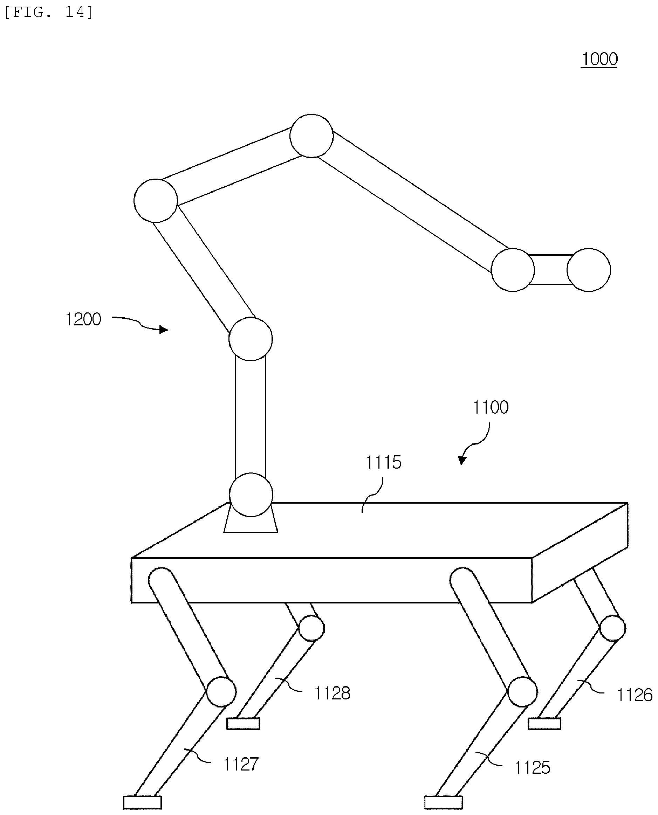

A walking robot 1000 according to an embodiment of the present invention may include a robot main body 1100 configured of a torso 1115 and legs 1125, 1126, 1127, and 1128, and a manipulator 1200 mounted on the robot main body 1100, as shown in FIG. 14.

In this case, a plurality of collision-prone parts may be set on the robot main body 1100, and a plurality of collision-prone parts may also be set on the manipulator 1200.

Here, the first collision-prone part of the manipulator 1200 may include a link portion that moves by a joint provided in the manipulator 1200, and the second collision-prone part of the robot main body 1100 may include a link portion that moves by a part of the torso 1115 or a joint of the legs 1125, 1126, 1127, and 1128.

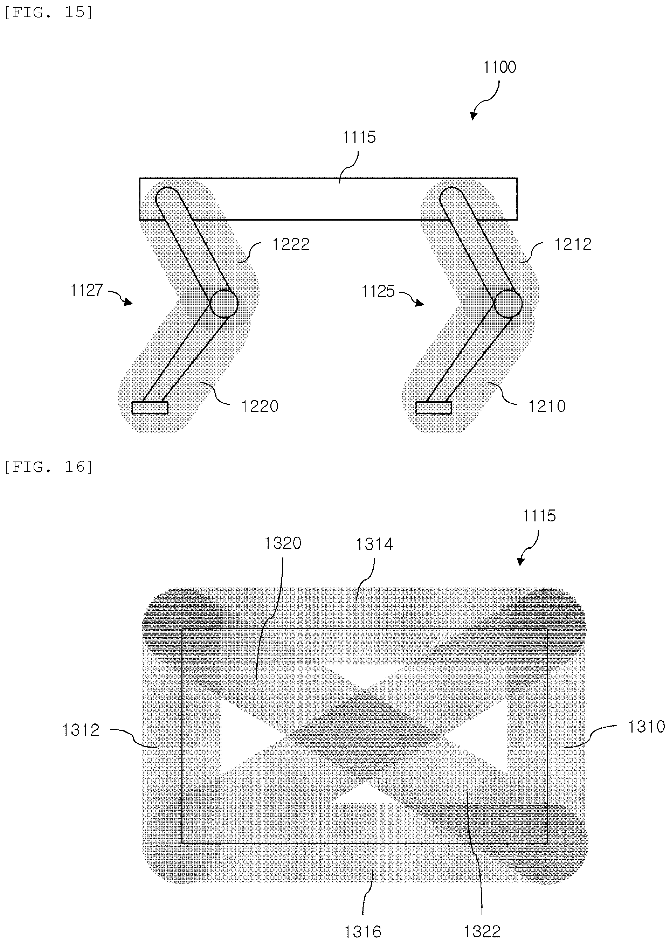

For example, in the robot main body 1100, collision-prone parts 1210, 1212, 1220, and 1222 may be set to include joints and links of the legs 1125 and 1127 as shown in FIG. 15, and collision-prone parts 1310, 1312, 1314, 1316, 1320, and 1322 may be set to include some parts of the torso 1115 as shown in FIG. 16.

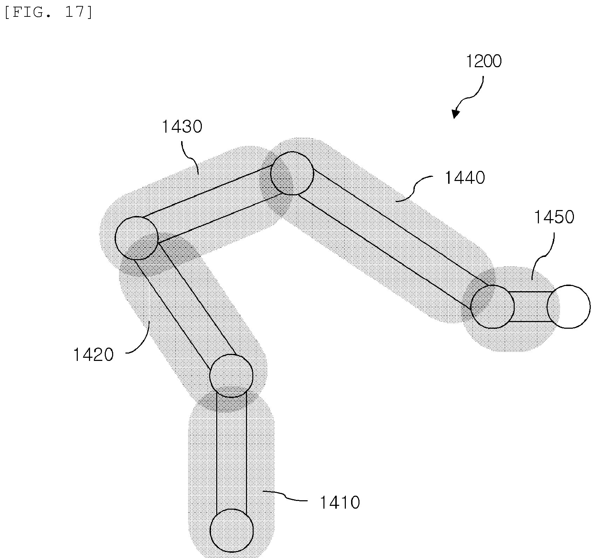

Meanwhile, in the manipulator 1200, collision-prone parts 1410, 1420, 1430, 1440, and 1450 may be set to include joints and links as shown in FIG. 17.

The three-dimensional shape, i.e., the collision-prone part modeled at step S700, may be configured to include a cylindrical part having a predetermined radius and two hemispherical parts located above and below the cylindrical part, and since it may be the same as described with reference to FIGS. 2 to 11, detailed description thereof will be omitted.

Next, the shortest distance between a first line segment of the first collision-prone part and a second line segment of the second collision-prone part modeled at step S700 is calculated (step S710).

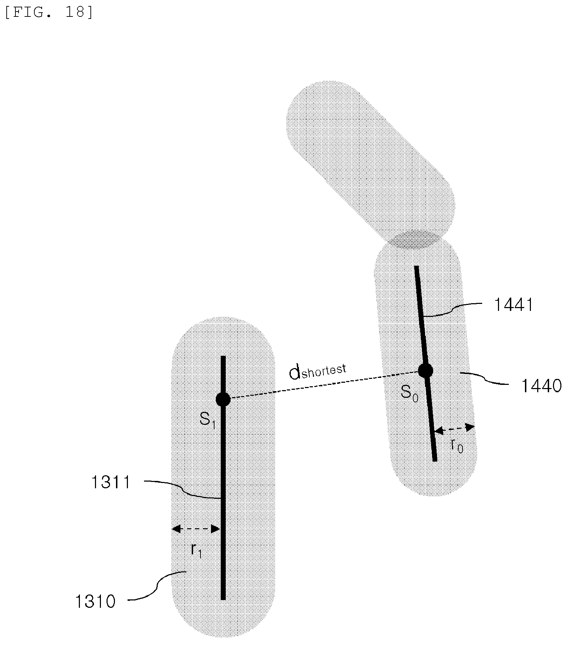

For example, as shown in FIG. 18, the shortest distance between the line segment 1441 of the first collision-prone part 1440 of the manipulator 1200 and the line segment 1311 of the second collision-prone part 1310 of the robot main body 1100 can be obtained.

Here, the first collision-prone part 1440 of the manipulator 1200 and the second collision-prone part 1310 of the robot main body 1100 may have different radii (r0, r1), for example, the radius (r₁) of the second collision-prone part 1310 of the robot main body 1100 may be larger than the radius (r₁) of the first collision-prone part 1440 of the manipulator 1200.

Thereafter, a relative Jacobian between the first and second points is calculated by applying a Jacobian matrix to the first point of the first line segment and the second point of the second line segment connecting the shortest distances calculated at step S710 (step S720).

Next, a speed for avoiding collision between the manipulator 1200 and the robot main body 1100 is calculated using the size of the three-dimensional shape, the shortest distance between the first and second line segments, and the relative Jacobian between the first and second points (step S730).

The relative Jacobian calculated at step S720 may be a difference between a first Jacobian value, to which the Jacobian matrix is applied at the first point, and a second Jacobian value, to which the Jacobian matrix is applied at the second point, and accordingly, may represent the relative velocity between the first and second collision-prone parts with respect to the first and second points.

For example, as shown in FIG. 18, the locations of a first point (S₀) and a second point (S₁) connecting the shortest distance (dₛₕₒᵣₜₑₛₜ) between a first line segment 1441 of the first collision-prone part 1440 and a second line segment 1311 of the second collision-prone part 1310 may be obtained.

When the manipulator 1200 is mounted on the robot main body 1100, the relative Jacobian between specific points (S₀, S₁) of the robot main body 1100 or the manipulator 1200 may be calculated as shown below in Equation 7. [Equation 7] $\begin{matrix}\left[\begin{matrix}1 & 0 & 0 & 0 & 0 & 0 & {J}_{00}^{S 0} - {J}_{00}^{S 1} & {J}_{01}^{S 0} - {J}_{01}^{S 1} & {J}_{02}^{S 0} - {J}_{02}^{S 1} & {J}_{03}^{S 0} - {J}_{03}^{S 1} & {J}_{04}^{S 0} - {J}_{04}^{S 1} & {J}_{05}^{S 0} - {J}_{05}^{S 1} \\ 0 & 1 & 0 & 0 & 0 & 0 & {J}_{10}^{S 0} - {J}_{10}^{S 1} & {J}_{11}^{S 0} - {J}_{11}^{S 1} & {J}_{12}^{S 0} - {J}_{12}^{S 1} & {J}_{13}^{S 0} - {J}_{13}^{S 1} & {J}_{14}^{S 0} - {J}_{14}^{S 1} & {J}_{15}^{S 0} - {J}_{15}^{S 1} \\ 0 & 0 & 1 & 0 & 0 & 0 & {J}_{20}^{S 0} - {J}_{20}^{S 1} & {J}_{21}^{S 0} - {J}_{21}^{S 1} & {J}_{22}^{S 0} - {J}_{22}^{S 1} & {J}_{23}^{S 0} - {J}_{23}^{S 1} & {J}_{24}^{S 0} - {J}_{24}^{S 1} & {J}_{25}^{S 0} - {J}_{25}^{S 1}\end{matrix}\right] \left[\begin{matrix}{v}_{q , x} \\ {v}_{q , y} \\ {v}_{q , z} \\ {ω}_{q , x} \\ {ω}_{q , y} \\ {ω}_{q , z} \\ {\dot{q}}_{m , 0} \\ {\dot{q}}_{m , 1} \\ {\dot{q}}_{m , 2} \\ {\dot{q}}_{m , 3} \\ {\dot{q}}_{m , 4} \\ {\dot{q}}_{m , 5}\end{matrix}\right] \\ = \left[\begin{matrix}v {′}_{m , x} \\ v {′}_{m , y} \\ v {′}_{m , z}\end{matrix}\right]\end{matrix}$

In Equation 7, v_{q,x}, v_{q,y}, and v_{q,z} are linear velocities in the x, y, and z axis directions of the torso 1115 part of the robot main body 1100, ω_{q,x}, ω_{q,y}, and ω_{q,z} are angular velocities in the roll, pitch, and yaw directions of the torso 1115, and q_{m,0}, q_{m,1}, q_{m,2}, q_{m,3}, q_{m,4}, and q_{m,5} are the angular velocities of six motors provided in the manipulator 1200.

As the relative Jacobian is calculated as described above, the relative velocity (v'_{m,x}, v'_{m,y}, v'_{m,z}) between the first collision-prone part 1440 of the manipulator 1200 and the second collision-prone part 1310 of the robot main body 1100 can be obtained on the basis of the first and second points (S₀, S₁).

In addition, the velocity components between the first and second collision-prone parts in a direction from the first point to the second point can be calculated using the relative Jacobian between the first and second points calculated as described above.

For example, as shown above in Equation 4, only the velocity component (v'^{s0s1}) in the direction from the first point (S₀) to the second point (S₁) can be extracted from the relative velocity between the first and second points (S₀, S₁) by multiplying the relative velocity (v'_{m,x}, v'_{m,y}, v'_{m,z}) between the first and second points (S₀, S₁) by the normal vector component in the direction from the first point (S₀) to the second point (S₁).

That is, the relative velocity component (v'^{s0s1}) in the direction from the first point (S₀) to the second point (S₁) can be obtained by performing inner product of the relative velocity (V') between the first and second points (S₀, S₁) and the normal vector (n^{s0s1}) in the direction from the first point (S₀) to the second point (S₁).

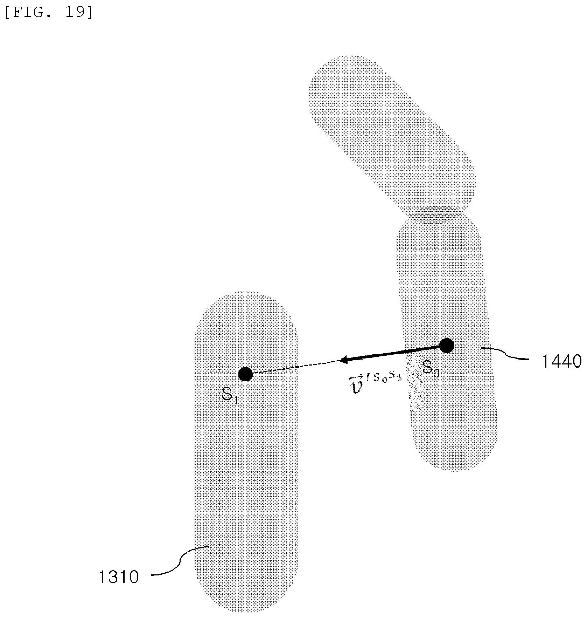

The relative velocity component (v'^{s0s1}) in the direction from the first point (S₀) to the second point (S₁) obtained as described above may represent the relative velocity magnitude (v'^{s0s1}) in the shortest distance direction from the first point (S₀) of the manipulator 1200 to the second point (S₁) of the robot main body 1100 as shown in FIG. 19.

At this point, when the relative velocity (v'^{s0s1}) in the shortest distance direction from the first point (S₀) is greater than 0, the first collision-prone part 1440 of the manipulator 1200 and the second collision-prone part 1310 of the robot main body 1100 move closer to each other in the collision direction with respect to the first and second points (S₀, S₁).

Meanwhile, when the relative velocity (v'^{s0s1}) in the shortest distance direction from the first point (S₀) is smaller than 0, the first collision-prone part 1440 of the manipulator 1200 and the second collision-prone part 1310 of the robot main body 1100 move in a direction away from each other with respect to the first and second points (S0, S1).

Therefore, as a speed for reducing the relative velocity (v'^{s0s1}) in the shortest distance direction from the first point (S₀) to the second point (S₁) to be smaller than 0 is calculated and applied so that the first and second collision-prone parts 1440 and 1310 may move in a direction away from each other with respect to the first and second points (S₀, S₁), collision between the first collision-prone part 1440 of the manipulator 1200 and the second collision-prone part 1310 of the robot main body 1100 can be avoided.

Here, the speed calculated to avoid collision between the first and second collision-prone parts 1440 and 1310 may be the motor angular velocity of at least one among the plurality of joints provided in the manipulator 1200, or the linear velocity of the robot main body 1100.

For example, in Equation 7, the relative velocity (v'^{s0s1}) in the shortest distance direction from the first point (S₀) to the second point (S₁) can be reduced to be smaller than 0 by changing at least one among the motor angular velocities (q_{m,0}, q_{m,1}, q_{m,2}, q_{m,3}, q_{m,4}, q_{m,5}) of the plurality of joints provided in the manipulator 1200, the linear velocities (v_{q,x}, v_{q,y}, v_{q,z}) of the robot main body 1100 in the x, y, and z axis directions, and the angular velocities (ω_{q,x}, ω_{q,y}, ω_{q,z}) of the robot main body 1100 in the roll, pitch, and yaw directions, and therefore, the manipulator 1200 and the robot main body 1100 move in a direction away from each other with respect to the first and second points (S₀, S₁), so that collision can be avoided.

As described above, step S730 may be performed to subtract the radius (r₀) of the three-dimensional shape of the first collision-prone part 1440 of the manipulator 1200 and the radius (r₁) of the three-dimensional shape of the second collision-prone part 1310 of the robot main body 1100 from the shortest distance (dₛₕₒᵣₜₑₛₜ) between the first and second line segments 1441 and 1311, and calculate a speed for avoiding collision between the manipulator 1200 and the robot main body 1100 according to the result of subtraction.

For example, a speed for avoiding collision between the manipulator 1200 and the robot main body 1100 can be calculated by performing step S730 only when the value obtained by subtracting the sum of radii (r₀, r₁) from the shortest distance (dₛₕₒᵣₜₑₛₜ) is a negative value smaller than 0 as shown in Equation 5.

Meanwhile, when the value obtained by subtracting the sum of radii (r₀, r₁) from the shortest distance (dₛₕₒᵣₜₑₛₜ) is a positive value greater than 0, the speed for avoiding collision between the manipulator 1200 and the robot main body 1100 may not be calculated.

In addition, the speed of at least one among the joint motor speed of the manipulator 1200 and the linear velocity and angular velocity of the robot main body 1100, for calculating the velocity component in a direction of moving the first point (S₀) and the second point (S₁) away from each other, may be obtained using the result of subtraction as described above.

For example, a speed for avoiding collision between the manipulator 1200 and the robot main body 1100 may be calculated using Quadratic Programming (QP), which is an optimization technique for obtaining an optimal solution satisfying the condition such as Equation 6 shown above.

Specifically, when the value obtained by subtracting the sum of radii (r₀, r₁) from the shortest distance (dₛₕₒᵣₜₑₛₜ) is a negative value smaller than 0, at least one among the motor angular velocities (q_{m,0}, q_{m,1}, q_{m,2}, q_{m,3}, q_{m,4}, q_{m,5}) of the plurality of joints provided in the manipulator 1200, the linear velocities (v_{q,x}, v_{q,y}, v_{q,z}) of the robot main body 1100 in the x, y, and z axis directions, and the angular velocities (ω_{q,x}, ω_{q,y}, ω_{q,z}) of the robot main body 1100 in the roll, pitch, and yaw directions, which controls the relative velocity (v'^{s0s1}) in the shortest distance direction from the first point (S₀) to the second point (S₁) to have a negative value smaller than 0, may be calculated.

Although it has been described in the embodiments of the present invention as an example that the first collision-prone part is located in the manipulator 1200 and the second collision-prone part is located in the robot main body 1100, the present invention is not limited thereto, and may be applied even when both the first and second collision-prone parts are located in the manipulator 1200.

The control method for self-collision avoidance of a walking robot equipped with a manipulator as described above with reference to FIGS. 13 to 19 may be performed by a walking robot according to an embodiment of the present invention.

Meanwhile, although it has been described in the embodiments of the present invention as an example that a manipulator having 6 degrees of freedom is mounted on a quadrupedal robot having four legs, the present invention is not limited thereto, and may be diversely applied to various mobile robots, such as a humanoid robot having two legs, a mobile robot that moves using wheels, and the like, on which another robot is mounted.

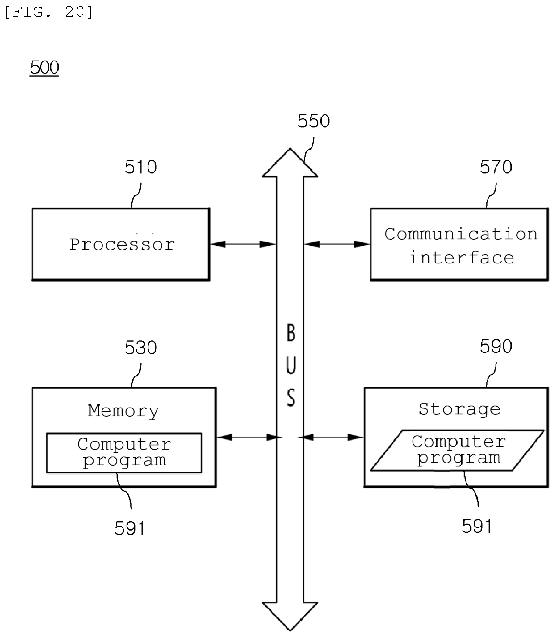

Hereinafter, an exemplary computing device 500, in which the methods described in various embodiments of the present invention are implemented, will be described with reference to FIG. 20. For example, the computing device 500 of FIG. 20 may be implemented as at least some components of a robot according to an embodiment of the present invention.

Referring to FIG. 20, the computing device 500 may include one or more processors 510, a bus 550, a communication interface 570, a memory 530 for loading computer programs 591 executed by the processor 510, and a storage 590 for storing the computer programs 591.

However, FIG. 20 only shows components related to the embodiments of the present invention. Therefore, those skilled in the art will understand that other general-purpose components may be included, in addition to the components shown in FIG. 20.

The processor 510 controls the general operation of each component of the computing device 500. The processor 510 may be configured to include at least one among a Central Processing Unit (CPU), a Micro Processor Unit (MPU), a Micro Controller Unit (MCU), a Graphic Processing Unit (GPU), and a processor of any form well known in the art of the present invention. In addition, the processor 510 may perform operations for at least one application or program for executing the methods and/or operations according to various embodiments of the present invention. The computing device 500 may have one or more processors.

The memory 530 stores various types of data, commands and/or information. The memory 530 may load one or more programs 591 from the storage 590 to execute the methods and/or operations according to various embodiments of the present invention. Examples of the memory 530 may be RAM, but are not limited thereto.

The bus 550 provides communication functions between the components of the computing device 500. The bus 550 may be implemented as various forms of buses, such as an address bus, a data bus, and a control bus.

The communication interface 570 supports wired and wireless Internet communication of the computing device 500. The communication interface 570 may also support various communication methods, in addition to the Internet communication. To this end, the communication interface 570 may be configured to include a communication module well known in the technical field of the present invention.

The storage 590 may store one or more computer programs 591 non-temporarily. The storage 590 may be configured to include volatile memory such as Read Only Memory (ROM), Erasable Programmable ROM (EPROM), Electrically Erasable Programmable ROM (EEPROM), flash memory, a hard disk, a removable disk, or any form of computer-readable recording media well known in the art to which the present invention belongs.

The computer program 591 may include one or more instructions, in which the methods and/or operations according to the embodiments of the present invention as described with reference to FIGS. 2 to 1 are implemented.

For example, the computer program 591 may include instructions for executing an operation of modeling each of collision-prone parts of the robot as a three-dimensional shape having a line segment and a circular cross-section, an operation of calculating a shortest distance between a first line segment of a first collision-prone part and a second line segment of a second collision-prone part among the modeled collision-prone parts, an operation of calculating a relative Jacobian between a first point on the first line segment and a second point on the second line segment connecting a shortest distance, and an operation of calculating a speed for avoiding collision between the first and second collision-prone parts using the size of the three-dimensional shape, the shortest distance between the first and second line segments, and the relative Jacobian between the first and second points.

In addition, the computer program 591 may include one or more instructions, in which the methods and/or operations according to the embodiments of the present invention as described with reference to FIGS. 13 to 19 are implemented.

For example, the computer program 591 may include instructions for executing an operation of modeling each of a first collision-prone part of the manipulator mounted in the robot main body and a second collision-prone part of the robot main body as a three-dimensional shape having a line segment and a circular cross section, an operation of calculating a shortest distance between a first line segment of the modeled first collision-prone part and a second line segment of the modeled second collision-prone part, an operation of calculating a relative Jacobian between a first point on the first line segment and a second point on the second line segment connecting the shortest distance, by applying a Jacobian matrix to the first and second points, and an operation of calculating a speed for avoiding collision between the manipulator and the robot main body using a size of the three-dimensional shape, the shortest distance between the first and second line segments, and the relative Jacobian between the first and second points.

When the computer program 591 is loaded onto the memory 530, the processor 510 may perform the methods and/or operations according to various embodiments of the present invention by executing the one or more of the instructions.

The methods according to the present invention described above can be manufactured as a program for being executed on a computer and may be stored in a computer-readable recording medium. Examples of the computer-readable recording medium include ROM, RAM, CD-ROM, a magnetic tape, a floppy disk, an optical data storage device, and the like.

The computer-readable recording medium may be distributed to computer systems connected through a network, and computer-readable codes may be stored and executed in a distributed manner. In addition, function programs, codes, and code segments for implementing the method may be easily inferred by programmers in the art.

Although the preferred embodiments of the present invention have been illustrated and described above, the present invention is not limited to the specific embodiments described above, and various modifications may be made by those skilled in the art without departing from the gist of the present invention as claimed in the claims. Furthermore, such modifications should not be individually understood from the technical spirit or prospect of the present invention.

## Claims

1. A control method for self-collision avoidance of a walking robot equipped with a manipulator in a robot main body, the control method comprising the steps of:
modeling each of a first collision-prone part of the manipulator and a second collision-prone part of the robot main body as a three-dimensional shape having a line segment and a circular cross section;
calculating a shortest distance between a first line segment of the modeled first collision-prone part and a second line segment of the modeled second collision-prone part;
calculating a relative Jacobian between a first point on the first line segment and a second point on the second line segment connecting the shortest distance, by applying a Jacobian matrix to the first and second points; and
calculating a speed for avoiding collision between the manipulator and the robot main body using a size of the three-dimensional shape, the shortest distance between the first and second line segments, and the relative Jacobian between the first and second points.

2. The method according to claim 1, wherein the first collision-prone part includes a link portion that moves by a joint provided in the manipulator.

3. The method according to claim 1, wherein the second collision-prone part includes a link portion that moves by a part of a torso of the robot main body or a joint of a leg.

4. The method according to claim 1, wherein the three-dimensional shape is formed using a set of points at a predetermined distance from the line segment.

5. The method according to claim 4, wherein a radius of the three-dimensional shape obtained by modeling the first collision-prone part, and a radius of the three-dimensional shape obtained by modeling the second collision-prone part are different from each other.

6. The method according to claim 1, wherein the relative Jacobian is a difference between a first Jacobian value obtained by applying a Jacobian matrix to the first point and a second Jacobian value obtained by applying a Jacobian matrix to the second point.

7. The method according to claim 6, wherein the relative Jacobian represents a relative velocity between the first and second collision-prone parts with respect to the first and second points.

8. The method according to claim 1, wherein the step of calculating a speed includes the steps of:
subtracting a radius of the three-dimensional shape of the first collision-prone part and a radius of the three-dimensional shape of the second collision-prone part from the shortest distance between the first and second line segments; and
changing a speed of at least one among the first and second collision-prone parts when a result of the subtraction has a negative value.

9. The method according to claim 8, wherein the step of calculating a speed further includes the steps of:
calculating a velocity component between the first and second collision-prone parts in a direction from the first point to the second point using the relative Jacobian between the first and second points; and
determining at least one among a motor angular velocity of a joint provided in the manipulator, and a linear velocity and an angular velocity of the robot main body using the subtracted result value to calculate the velocity component in a direction of moving the first point and the second point away from each other.

10. A computer program stored in a computer-readable recording medium in combination with hardware to execute the method of any one of claims 1 to 9.

11. A walking robot that performs the method of any one of claims 1 to 9.

12. A walking robot having a self-collision avoidance function, the robot comprising:
a processor;
a memory for loading a computer program executed by the processor; and
a storage for storing the computer program, wherein
the computer program includes instructions for executing an operation of modeling each of a first collision-prone part of the manipulator mounted in the robot main body and a second collision-prone part of the robot main body as a three-dimensional shape having a line segment and a circular cross section, an operation of calculating a shortest distance between a first line segment of the modeled first collision-prone part and a second line segment of the modeled second collision-prone part, an operation of calculating a relative Jacobian between a first point on the first line segment and a second point on the second line segment connecting the shortest distance, by applying a Jacobian matrix to the first and second points, and an operation of calculating a speed for avoiding collision between the manipulator and the robot main body using a size of the three-dimensional shape, the shortest distance between the first and second line segments, and the relative Jacobian between the first and second points.
